# EUROPEAN PATENT SPECIFICATION

(11) **EP 3 744 594 B1**
(45) Date of publication and mention of the grant of the patent: **11.09.2024**
(21) Application number: 19889195.4
(22) Date of filing: 22.11.2019
(51) Int. Cl.: B60T 17/00, B60T 17/22, B61H 5/00, F16D 65/00

(54) **ANTI-FREEZING METHOD AND DEVICE FOR BRAKING DEVICE**
FROSTSCHUTZVERFAHREN UND VORRICHTUNG FÜR EINE BREMSVORRICHTUNG
PROCÉDÉ ET DISPOSITIF ANTIGEL POUR DISPOSITIF DE FREINAGE

(30) Priority: 29.11.2018 CN 201811440888
(43) Date of publication of application: 02.12.2020
(73) Proprietor: CRRC Changchun Railway Vehicles Co., Ltd., Changchun, Jilin 130000 (CN)
(72) Inventor: LI, Hongwei, Jilin 130000 (CN); ZHAO, Yangkun, Jilin 130000 (CN); HU, Gongjue, Jilin 130000 (CN); SHI, Xuejiao, Jilin 130000 (CN); YU, Wenlong, Jilin 130000 (CN)
(74) Representative: Laufhütte, Dieter
(86) International application number: PCT/CN2019/120195
(87) International publication number: WO 2020/108394

(56) References cited:
- EP-A1- 3 194 228
- WO-A1-01/36240
- CN-A- 102 015 393
- CN-A- 105 398 441
- CN-A- 107 776 604
- CN-A- 108 128 313
- CN-U- 203 958 185
- CN-Y- 2 919 224
- DE-A1- 102008 015 873
- JP-B2- 4 719 700
- US-A1- 2018 229 698

## Description

The present invention claims priority to Chinese Patent Application No. 201811440888.5, titled "ANTI-FREEZING METHOD AND APPARATUS FOR BRAKING DEVICE", filed on December 29, 2018 with the China National Intellectual Property Administration.

### FIELD

The present invention relates to the technical field of railway vehicle, and in particular, to an anti-freezing method and an anti-freezing apparatus for a braking device.

### BACKGROUND

A braking device is capable to decelerate or halt a train, which ensures travelling safety. The braking device includes an air supply system and an automatic brake valve that are installed on a locomotive, brakes and basic braking devices that are separately installed on the locomotive and carriages, and a brake pipe running through the whole train. The basic braking device is provided with a brake caliper, and reliable operation of the brake caliper is a key factor in ensuring a braking effect of the basic braking device.

The brake caliper is usually in a clamped state when a railway vehicle is parked, so as to ensure stability of the railway vehicle. In a case that the railway vehicle is parked outdoors in a cold environment for a long time, the brake caliper would freeze and cannot be timely released when starting the railway vehicle. Thereby, normal start of the railway vehicle is affected.

In Chinese Patent No. CN105398441 B, a method for controlling deicing of an electric multiple unit (EMU) is provided. In the method, when the EMU receives the snow-resistant braking command, the current working state of the EMU is detecting. In the case that the current working state of the EMU is a traction condition, whether the braking parameter of the EMU meets a preset braking condition is determined. In the case that the braking parameter of the EMU meets the preset braking condition, a braking force is applied to a brake disc of the plurality of grouped vehicles included in the EMU.

In US Patent Application Publication No. US 2018/0229698, methods and apparatus to perform brake sweeping procedures on vehicle brakes are provided. The apparatus includes a controller to determine when a vehicle has made a turn, compare an angle at which the vehicle has turned to an angle threshold, and schedule a brake sweeping procedure based on the comparison.

In German Patent Application Publication No, DE102008015873, a vehicle is provided, which has a device for monitoring the braking effect. The vehicle has a support structure, a chassis and at least one brake unit, which is fastened to the support structure of the vehicle and transmits a braking force to a friction surface of a rotating element of the chassis of the vehicle. In order to improve the monitoring of the braking effect, the invention proposes that at least one load sensor is arranged on the brake unit.

In Chinese Patent Application Publication No. 108128313A, a method for anti-freezing control of a train is provided. The method includes: receiving anti-freezing indication information, wherein the anti-freezing indication information is used to indicate that the train is anti-freeze controlled to prevent the train from freezing; responding to the anti-freezing indication information to control the train to enter the anti-freeze state; when the train is in the anti-freeze state, controlling the train to perform anti-freeze operation; and after it is determined that the anti-freezing operation is completed, controlling the train to exit the anti-freeze state.

### SUMMARY

In view of the above, an object of the present invention is to provide an anti-freezing method and an anti-freezing apparatus for a braking device, which can prevent a brake caliper from freezing and ensure normal start of a railway vehicle in a low-temperature environment. Specific solutions are as follows.

In a first aspect, an anti-freezing method for a braking device is provided according to an embodiment of the present invention, including:
obtaining an ambient temperature and a state of a railway vehicle; and
controlling a brake caliper to perform a release-and-clamp operation based on an interval of a first preset period, in a case that the ambient temperature is lower than a preset temperature threshold and the state of the railway vehicle meets a preset vehicle condition, where the release-and-clamp operation includes releasing the brake caliper for a second preset period and then clamping the brake caliper.

In an optional embodiment, controlling the brake caliper to perform the release-and-clamp operation based on the interval of the first preset period includes:
controlling multiple brake calipers to perform the release-and-clamp operation in sequence, based on the interval of the first preset period.

In an optional embodiment, controlling the multiple brake calipers to perform the release-and-clamp operation in sequence based on the interval of the first period includes:
controlling the multiple brake calipers to perform the release-and-clamp operation according to a preset numbering sequence;
where controlling the multiple brake calipers to perform the release-and-clamp operation according to the preset numbering sequence is repeated after the last brake caliper according to the preset numbering sequence performs the release-and-clamp operation.

According to the invention, in any anti-freezing method for the braking device according to the first aspect, the preset vehicle condition includes: a power source of the railway vehicle being in a normal state, parking braking not being applied to the railway vehicle, and service braking applied to the railway vehicle being at a maximum level

In an optional embodiment, in any anti-freezing method for the braking device according to the first aspect, the method further includes: obtaining an instruction for activating an anti-freezing mode.

In an optional embodiment, in any anti-freezing method for the braking device according to the first aspect, the method further includes:
timing a third period, in response to determining that the ambient temperature is lower than the preset temperature threshold and the state of the railway vehicle meets the preset vehicle condition; and
controlling all brake calipers to be clamped to restore a braking state, in response to the third period reaching a preset time threshold for termination.

In another aspect, an anti-freezing apparatus for a braking device is provided according to an embodiment of the present invention, including:
an obtaining unit, configured to obtain an ambient temperature and a state of a railway vehicle; and
a control unit, configured to control a brake caliper to perform a release-and-clamp operation based on an interval of a first preset period, in a case that the ambient temperature is lower than a preset temperature threshold and the state of the railway vehicle meets a preset vehicle condition, where the release-and-clamp operation includes releasing the brake caliper for a second preset period and then clamping the brake caliper, wherein the preset vehicle condition comprises: a power source of the railway vehicle being in a normal state, parking braking not being applied to the railway vehicle, and service braking applied to the railway vehicle being at a maximum level.

In an optional embodiment, the control unit is further configured to control multiple brake calipers to perform the release-and-clamp operation in sequence, based on the interval of the first preset period.

In an optional embodiment, the control unit is further configured to
control the multiple brake calipers to perform the release-and-clamp operation according to a preset numbering sequence; and
repeat controlling the multiple brake calipers to perform the release-and-clamp operation according to the preset numbering sequence, after the last brake caliper according to the preset numbering sequence performs the release-and-clamp operation.

In an optional embodiment, in any anti-freezing apparatus for the braking device according to the second aspect, the apparatus further includes:
a timing unit, configured to time a third period, in response to it being determined that the ambient temperature is lower than the preset temperature threshold and the state of the railway vehicle meets the preset vehicle condition; and
a centralized control unit, configured to control all brake calipers to be clamped to restore a braking state, in response to the third period reaching a preset time threshold for termination.

Based on the aforementioned technical solutions, the anti-freezing method and the anti-freezing apparatus for the braking device are provided according to embodiments of the present invention. It is determined whether to take anti-freezing measure for the brake caliper of the railway vehicle, according to the ambient temperature and the state of the railway vehicle. In case of determining that the ambient temperature is lower than the preset temperature threshold and the state of the railway vehicle meets the preset vehicle condition, the brake caliper is controlled to be released for the second preset period and then clamped. The release-and-clamp operation in which the brake caliper is released and clamped is repeated in cycles based on the interval of the first preset period. The brake caliper is cyclically opened and closed in cold weather, and thereby is prevented from being fixed for a long time and freezing. It is ensured that the railway vehicle can start normally in cold weather.

### BRIEF DESCRIPTION OF THE DRAWINGS

For clearer illustration of the technical solutions according to embodiments of the present invention or conventional technology, the drawings involved in description of the embodiments according to the present invention or conventional technology are briefly described hereinafter. Apparently, the drawings in the following descriptions only illustrate some embodiments of the present invention, and other drawings may be obtained by those skilled in the art based on the drawings without any inventive efforts.
Figure 1 is a flow chart of an anti-freezing method for a braking device according to an embodiment of the present invention;
Figure 2 is a flow chart of another anti-freezing method for a braking device according to an embodiment of the present invention;
Figure 3 is a block diagram of an anti-freezing apparatus for a braking device according to an embodiment of the present invention; and
Figure 4 is a block diagram of another anti-freezing apparatus for a braking device according to an embodiment of the present invention.

### DETAILED DESCRIPTION

To make the object, technical solutions and advantages of the present invention clearer, the technical solutions according to the embodiments of the present invention will be described clearly and completely as follows in conjunction with the drawings in the embodiments of the present invention. Apparently, the described embodiments are only some rather than all of the embodiments of the present invention.

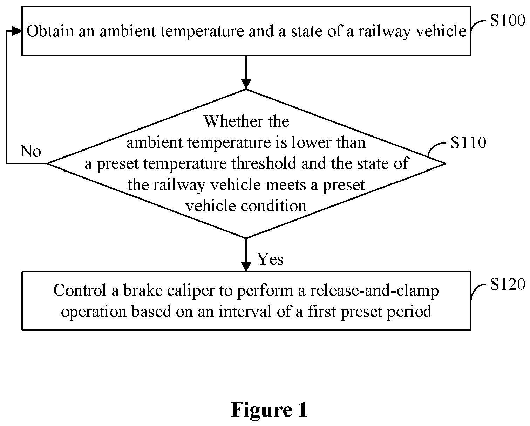

Reference is made to Figure 1, which is a flow chart of an anti-freezing method for a braking device according to an embodiment of the present invention. The method may be applied to a locomotive control system of a railway vehicle, which aims to prevent a braking device of the railway vehicle from freezing due to parking the railway vehicle in cold weather for a long time. It is appreciated that the method provided according to embodiments of the present invention may be applied to a remote control system. The remote control system may realize remote control on the braking device of the railway vehicle according to the anti-freezing method in embodiments of the present invention, thereby achieving the object of the present invention.

Reference is made to Figure 1. An anti-freezing control method for a braking device according to an embodiment of the present invention may include following steps S100 to S 120.

In step S100, an ambient temperature and a state of a railway vehicle are obtained.

As mentioned above, when a railway vehicle is parked, a brake caliper of a braking device is usually in a clamped state for safety considerations, to prevent the railway vehicle from rolling. In a case that the railway vehicle is parked for a long time in cold weather, the brake calipers would freeze and the railway vehicle cannot start normally. Therefore, it is necessary to obtain the ambient temperature of the railway vehicle after the railway vehicle is parked, so as to determine accurately whether the railway vehicle has a risk of freezing in the cold weather.

Furthermore, the parked railway vehicle always corresponds to a state of the railway vehicle, for example, the brake caliper being clamped, a vehicle control system standing by, or the like. As mentioned above, besides an environmental condition, the state of the railway vehicle is also a condition which needs to be considered. Therefore, it is also necessary to obtain the state of the railway vehicle.

In step S 110, it is determined whether the ambient temperature is lower than a preset temperature threshold and the state of the railway vehicle meets a preset vehicle condition. The process goes to step S120 in case of positive determination, and returns to the step S100 in case of negative determination.

It is determined whether the ambient temperature of the railway vehicle is lower than the preset temperature threshold, and further determined whether the state of the railway vehicle meets the preset vehicle condition. In a case that the ambient temperature is lower than the preset temperature threshold and the state of the railway vehicle meets the preset vehicle condition, the process goes to step S120. In a case that either determination condition is not met, the process would return to the step S100, until both determination conditions are met.

In an optional embodiment, the preset temperature threshold may be set according to a region in which the railway vehicle is located. The preset temperature threshold for any region should be a temperature capable to result in freezing. For example, the preset temperature threshold may be set as -10°C, -5°C, or the like.

According to the invention, the preset vehicle condition includes: the railway vehicle being normally connected to a power supply, parking braking not being applied to the railway vehicle, and a driver controller being set at a "7^{th} level braking" position, i.e. service braking applied to the railway vehicle being at a maximum level, i.e. 7^{th} level. The preset vehicle condition may further include the railway vehicle raising a pantograph to receive power.

It may be determined that the state of the railway vehicle meets the preset vehicle condition only when all the aforementioned preset vehicle conditions are met by the railway vehicle, and it may be determined that the state of the railway vehicle does not meet the preset vehicle condition when one or more of the aforementioned preset vehicle conditions are not met. Further, the preset vehicle condition should be flexibly selected based on a type of the railway vehicle. The preset vehicle condition is not limited to the aforementioned cases listed in this embodiment.

In step S120, a brake caliper is controlled to perform a release-and-clamp operation based on an interval of a first preset period.

In a case that the ambient temperature is lower than the preset temperature threshold and the state of the railway vehicle meets the preset vehicle condition, the brake caliper is controlled to perform the release-and-clamp operation based on the interval of the first preset period. In a specific embodiment, the release-and-clamp operation includes releasing the brake caliper for a second preset period and then clamping the brake caliper.

In each operation cycle, the brake caliper is controlled to be released for the second preset period, and then controlled to be clamped after the second preset period lapses. Further, the cycle may be determined by the interval of the first preset period. That is, after the brake caliper is controlled to be clamped, the first preset period lapses and then the brake caliper is controlled to perform a next release-and-clamp operation. The brake caliper is controlled to be released and clamped periodically, such that the brake caliper is prevented from freezing.

In an optional embodiment, it is necessary to apply a braking pressure to the brake caliper during the release-and-clamp operation, so as to ensure the brake caliper to perform the release-and-clamp operations effectively. A small pressure may be sufficient since the railway vehicle is in a halting state. For example, a pressure of 3bar is applied.

In an optional embodiment, a railway vehicle in practice usually includes multiple carriages that are connected, and each carriage is provided with a brake caliper. Brake calipers arranged on one carriage may be treated as a group of brake calipers. In a case that there are multiple groups of brake calipers, the multiple groups of brake calipers may be controlled to perform the release-and-clamp operation in sequence. After a group of brake calipers implements the release-and-clamp operation, the first preset period lapses, and then a next group of brake calipers is controlled to perform the release-and-clamp operation. That is, the brake calipers are controlled to perform the release-and-clamp operation in sequence, and the interval between every two adjacent release-and-clamp operations is the first preset period.

In an optional embodiment, groups of brake calipers may be numbered with a preset numbering sequence. All groups of brake calipers are controlled to perform the release-and-clamp operation in the preset numbering sequence. The interval between every two adjacent release-and-clamp operations is the first preset period. When the brake caliper corresponding to the last number in the preset numbering sequence has implemented the release-and-clamp operation, it means that all brake calipers have performed the release-and-clamp operation once in a current cycle. Afterwards, the release-and-clamp operations start from the brake caliper corresponding to the first number in the preset numbering sequence, and are repeated according to the preset numbering sequence. Hence, the release-and-clamp operation is cyclically performed accordingly. It is ensured that the brake calipers are repeatedly activated, and thereby are prevented from freezing.

In a specific embodiment, a carriage number may serve as the sequential number of brake calipers, or the groups of brake calipers may be independently numbered. The preset numbering sequence may refer to an ascending order of sequential numbers, a descending order of sequential numbers, or even any random order of sequential numbers, as long as such order defines an executing sequence for all groups of brake calipers clearly and no group is missing in each cycle.

Given safety, it is necessary to control a quantity of brake calipers that are simultaneously released when the railway vehicle is parked, so as to prevent the railway vehicle from rolling. For example, one sequential number may be assigned to brake calipers of one carriage, and only such group of brake calipers is controlled to be simultaneously released. A next group of brake calipers is not released until the first period lapses after the currently released group of brake calipers is clamped. In a case that a large quantity of carriages is connected in the railway vehicle, a same sequential number may be assigned to two or more groups of brake calipers, and each time multiple groups of brake calipers are controlled to perform the release-and-clamp operation simultaneously. Efficiency of a control process may be improved while safety of the railway vehicle is ensured. Thereby, activation of the brake calipers is fully exploited, and the anti-freezing effect is improved. A specific quantity of brake calipers that perform the release-and-clamp operation simultaneously is determined based on a specific condition of the railway vehicle.

The anti-freezing control method for the braking device is provided according to embodiments of the present invention. The release-and-clamp operation in which the brake caliper is released and clamped is repeated in cycles based on the interval of the first preset period. The brake caliper is cyclically opened and closed in cold weather, and thereby is prevented from being fixed for a long time and freezing. It is ensured that the railway vehicle can start normally in cold weather.

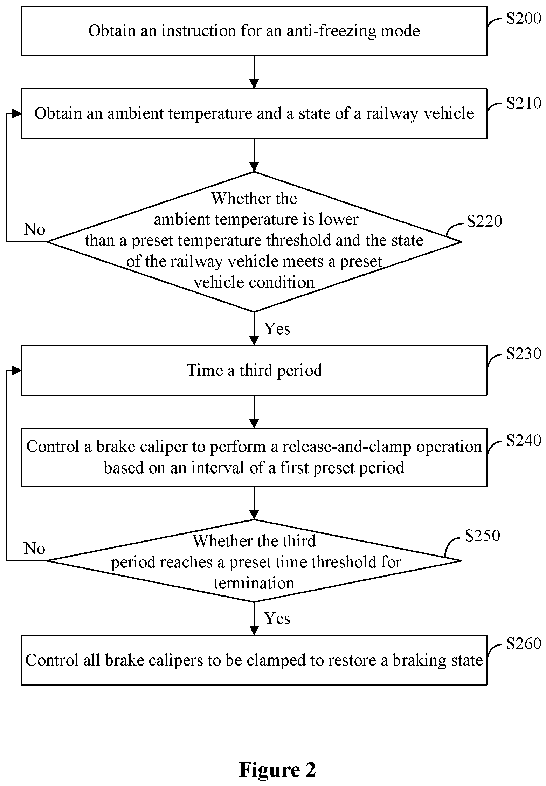

Reference is made to Figure 2, which is a flow chart of another anti-freezing method for a braking device according to an embodiment of the present invention. An anti-freezing method for a braking device includes following steps S200 to S260.

In step S200, an instruction for an anti-freezing mode instruction is obtained.

The instruction for the anti-freezing mode instruction may be manually configured. When an operator judges that it is necessary to start a control process as follows, the instruction for the anti-freezing mode is transmitted via a related device. In addition, the railway vehicle should meet the preset vehicle condition when implementing the control method according to an embodiment as shown in Figure 1. Thereby, the operator may activate the instruction for the anti-freezing mode after the railway vehicle meets the corresponding vehicle condition. That is, it may be achieved that the operator is able to determine whether to perform anti-freezing control on the railway vehicle, through the instruction for the anti-freezing mode in this embodiment. Thereby, the control process can be performed more flexibly.

In an optional embodiment, the operator may send the instruction for the anti-freezing mode to an automatic control system of the railway vehicle, via a human-machine interface configured by a control system of a locomotive. The automatic control system of the railway vehicle may execute a program corresponding to an anti-freezing method for a braking device according to an embodiment of the present invention, so as to control brake calipers.

In step S210, an ambient temperature and a state of a railway vehicle are obtained.

In an optional embodiment, execution of the step S210 may refer to the description related to the step S100 as shown in Figure 1, and is not repeated herein.

In step S220, it is determined whether the ambient temperature is lower than a preset temperature threshold and the state of the railway vehicle meets a preset vehicle condition. The process goes to step S230 in case of positive determination, and returns to the step S210 in case of negative determination.

In an optional embodiment, execution of the step S220 may refer to the description related to the step S 110 as shown in Figure 1, and is not repeated herein.

In step S230, a third period is timed.

It is discovered that in cold weather, the railway vehicle would not freeze as long as activation of the braking device of the railway vehicle last for a certain time period, even if afterwards the release-and-clamp operation is terminated and the railway vehicle enters a braking state. Therefore, it is required to time a period in which the railway vehicle keeps performing the release-and-clamp operation, and such period is referred to as the third period. The brake caliper of the railway vehicle keeps performing the release-and-clamp operation for the third period. The railway vehicle enters the braking state in a case that the third period reaches a preset time threshold for termination. In such case, the brake caliper would not freeze.

Timing of the third period may be started when it is determined that the ambient temperature is lower than the preset temperature threshold and the state of the railway vehicle meets the preset vehicle condition.

In step S240, a brake caliper is controlled to perform a release-and-clamp operation based on an interval of a first preset period

In an optional embodiment, execution of the step S240 may refer to the description related to the step S120 as shown in Figure 1, and is not repeated herein.

The step S230 and the step S240 may be simultaneously performed. That is, after determining that the preset condition is satisfied, the step S230 of timing the third period and the step S240 of controlling the brake caliper starts simultaneously. Further, a result of the timing in the step S230 may serve as a condition for terminating the step S240.

In step S250, it is determined whether the third period reaches a preset time threshold for termination. The process goes to step S260 in case of positive determination, and the method returns to the step S230 to continue timing the third period in case of negative determination.

It is determined whether the third period reaches the preset time threshold for termination. The process goes to step S260 in a case that the third period has reached the preset time threshold for termination, and otherwise the method returns to the step S230 to continue timing the third period.

In step S260, all brake calipers are controlled to be clamped to restore a braking state.

In a case that the third period in which the brake calipers keep performing the release-and-clamp operation reaches the preset time threshold for termination, all brake calipers are controlled to be clamped to restore the braking state of the brake device. The anti-freezing control process terminates.

The method is provided according to embodiments of the present invention. The anti-freezing control process may be manually controlled by the operator. The braking state of the brake device is restored after activation of the brake calipers is controlled for a period of time. Not only the railway vehicle is prevented from freezing, but also time of the anti-freezing control process is controlled, which reduces energy consumption of the railway vehicle effectively.

Hereinafter described is an invention scenario of an anti-freezing method for a braking device according to an embodiment of the present invention.

A railway vehicle includes 8 carriages that are connected, that is, the railway vehicle is provided with eight groups of brake calipers. The groups of brake calipers are sequentially numbered by using corresponding carriage numbers, 1 to 8, respectively. The brake calipers are controlled in a sequence from No. 1 to No. 8. The second preset period for which the brake caliper is released each time is 55s. The interval of the first preset period is 5s. The preset time threshold for termination is set as 3 hours. The preset threshold for low temperature is selected as -10°C.

After the railway vehicle halts, a pantograph of the railway vehicle is raised by an operator to receive power, parking braking is cancelled, and the driver controller is set at a 7^{th} level braking position. In such case, the state of the railway vehicle meets the preset vehicle condition. The operator sends the instruction for the anti-freezing mode via a human-machine interface. After receiving the instruction for the anti-freezing mode, a train automatic control system of the railway vehicle starts to obtain the ambient temperature and the state of the railway vehicle. In a case that the ambient temperature is lower than -10°C, an anti-freezing control process is started, and simultaneously the third period is timed.

Specifically, a group of brake calipers of the No. 1 carriage is controlled to be released for 55s and then clamped. After an interval of 5s, a group of brake calipers of the No. 2 carriage is controlled to be released for 55s and then clamped. Analogy can be made to other carriages. After a group of brake calipers of the No. 8 carriage is clamped, an interval of 5s lapses, and then a next cycle of the control process starts from the group of brake calipers of the No. 1 carriage. In a case that the third period reaches 3 hours, all brake calipers are controlled to be clamped to restore the braking state.

Hereinafter described is an anti-freezing apparatus for a braking device according to an embodiment of the present invention. The anti-freezing apparatus for a braking device described hereinafter may be a functional module structure provided in central equipment, which is configured to realize an anti-freezing method for a braking device according to embodiments of the present invention. Following description and the forgoing embodiments may refer to each other.

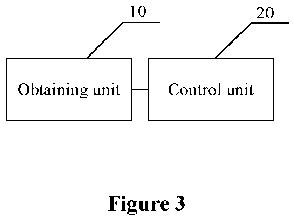

Figure 3 is a block diagram of an anti-freezing apparatus for a braking device according to an embodiment of the present invention. Referring to Figure 3, the anti-freezing apparatus for a braking device may include an obtaining unit 10 and a control unit 20. The obtaining unit 10 is configured to obtain an ambient temperature and a state of a railway vehicle. The control unit 20 is configured to control a brake caliper to perform a release-and-clamp operation based on an interval of a first preset period, in a case that the ambient temperature is lower than a preset temperature threshold and the state of the railway vehicle meets a preset vehicle condition, where the release-and-clamp operation includes releasing the brake caliper for a second preset period and then clamping the brake caliper.

In an optional embodiment, the control unit 20 is further configured to control multiple brake calipers to perform the release-and-clamp operation in sequence, based on the interval of the first preset period.

In an optional embodiment, the control unit 20 is further configured to: control the multiple brake calipers to perform the release-and-clamp operation according to a preset numbering sequence; and repeat controlling the multiple brake calipers to perform the release-and-clamp operation according to the preset numbering sequence, after the last brake caliper according to the preset numbering sequence performs the release-and-clamp operation.

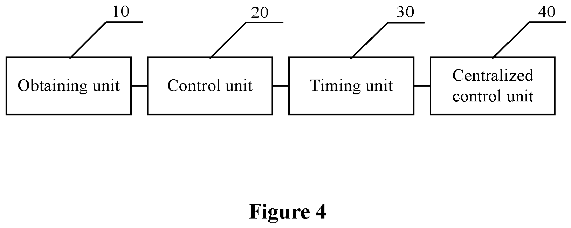

Reference is made to Figure 4, which is a block diagram of another anti-freezing apparatus for a braking device according to an embodiment of the present invention. In an optional embodiment, the anti-freezing apparatus further includes a timing unit 30 and a centralized control unit 40 on a basis of Figure 3.

The timing unit 30 is configured to time a third period, in response to it being determined that the ambient temperature is lower than the preset temperature threshold and the state of the railway vehicle meets the preset vehicle condition.

The centralized control unit 40 is configured to control all brake calipers to be clamped to restore a braking state, in response to the third period reaching a preset time threshold for termination.

As further be appreciated by those skilled in the art, the units and algorithmic steps in the examples described according to the embodiments disclosed herein can be implemented in forms of electronic hardware, computer software or the combination of the both. To illustrate the interchangeability of the hardware and the software clearly, the components and the steps in the examples are described generally according to functions in the above description. Whether hardware or software is used to implement the functions depends on a specific invention and design constraints for the technical solution. For each specific invention, different methods may be used by those skilled in the art to implement the described function, and such implementation should not be considered to depart from the scope of the present invention.

The steps of the method or algorithm described according to the embodiments disclosed herein can be implemented in forms of hardware, a software module executed by a processor or the combination of the both. The software module may be stored in a Random Access Memory (RAM), a memory, a Read-Only Memory (ROM), an electrically programmable ROM, an electrically erasable programmable ROM, a register, a hardware disk, a movable magnetic disk, CD-ROM or any other forms of storage medium well known in the art.

According to the description of the disclosed embodiments, those skilled in the art can implement or use the present invention. Various modifications made to these embodiments may be obvious to those skilled in the art. Therefore, the present invention is not limited to the embodiments described herein but only within the scope of the appended claims.

## Claims

1. An anti-freezing method for a braking device, comprising:
obtaining (S100) an ambient temperature and a state of a railway vehicle; and
controlling (S120) a brake caliper to perform a release-and-clamp operation based on an interval of a first preset period, in a case that the ambient temperature is lower than a preset temperature threshold and the state of the railway vehicle meets a preset vehicle condition;
wherein the release-and-clamp operation comprises: releasing the brake caliper for a second preset period and then clamping the brake caliper, and
the method being **characterized in that**
the preset vehicle condition comprises:
a power source of the railway vehicle being in a normal state,
parking braking not being applied to the railway vehicle, and
service braking applied to the railway vehicle being at a maximum level.

2. The anti-freezing method according to claim 1, wherein controlling (S120) the brake caliper to perform the release-and-clamp operation based on the interval of the first preset period comprises:
controlling a plurality of brake calipers to perform the release-and-clamp operation in sequence, based on the interval of the first preset period.

3. The anti-freezing method according to claim 2, wherein controlling the plurality of brake calipers to perform the release-and-clamp operation in sequence based on the interval of the first period comprises:
controlling the plurality of brake calipers to perform the release-and-clamp operation according to a preset numbering sequence;
wherein controlling the plurality of brake calipers to perform the release-and-clamp operation according to the preset numbering sequence is repeated, after the last brake caliper according to the preset numbering sequence performs the release-and-clamp operation.

4. The anti-freezing method according to any one of claims 1 to 3, further comprising:
obtaining (S200) an instruction for activating an anti-freezing mode.

5. The anti-freezing method according to any one of claims 1 to 3, further comprising:
timing (S203) a third period, in response to determining that the ambient temperature is lower than the preset temperature threshold and the state of the railway vehicle meets the preset vehicle condition; and
controlling (S206) all brake calipers to be clamped to restore a braking state, in response to the third period reaching a preset time threshold for termination.

6. An anti-freezing apparatus for a braking device, comprising:
an obtaining unit (10), configured to obtain an ambient temperature and a state of a railway vehicle; and
a control unit (20), configured to control a brake caliper to perform a release-and-clamp operation based on an interval of a first preset period, in a case that the ambient temperature is lower than a preset temperature threshold and the state of the railway vehicle meets a preset vehicle condition;
wherein the release-and-clamp operation comprises releasing the brake caliper for a second preset period and then clamping the brake caliper,
the apparatus being **characterized in that**
the preset vehicle condition comprises:
a power source of the railway vehicle being in a normal state,
parking braking not being applied to the railway vehicle, and
service braking applied to the railway vehicle being at a maximum level.

7. The anti-freezing apparatus according to claim 6, wherein the control unit (20) is further configured to control a plurality of brake calipers to perform the release-and-clamp operation in sequence, based on the interval of the first preset period.

8. The anti-freezing apparatus according to claim 7, wherein the control unit (20) is further configured to:
control the plurality of brake calipers to perform the release-and-clamp operation according to a preset numbering sequence; and
repeat controlling the plurality of brake calipers to perform the release-and-clamp operation according to the preset numbering sequence, after the last brake caliper according to the preset numbering sequence performs the release-and-clamp operation.

9. The anti-freezing apparatus according to any one of claims 6 to 8, further comprising:
a timing unit (30), configured to time a third period, in response to it being determined that the ambient temperature is lower than the preset temperature threshold and the state of the railway vehicle meets the preset vehicle condition; and
a centralized control unit (40), configured to control all brake calipers to be clamped to restore a braking state, in response to the third period reaching a preset time threshold for termination.

## Patentansprüche

1. Frostschutzverfahren für eine Bremsvorrichtung, umfassend:
Erhalten (S100) einer Umgebungstemperatur und eines Zustands eines Schienenfahrzeugs und
Steuern (S120) eines Bremssattels, um einen Löse- und Klemmvorgang basierend auf einem Intervall eines ersten voreingestellten Zeitraums durchzuführen, in einem Fall, in dem die Umgebungstemperatur niedriger ist als ein voreingestellter Temperaturschwellenwert und der Zustand des Schienenfahrzeugs eine voreingestellte Fahrzeugbedingung erfüllt;
wobei der Löse- und Klemmvorgang umfasst: Lösen des Bremssattels über einen zweiten voreingestellten Zeitraum und anschließendes Klemmen des Bremssattels, und
wobei das Verfahren **dadurch gekennzeichnet ist, dass** die voreingestellte Fahrzeugbedingung umfasst:
eine Energiequelle des Schienenfahrzeugs ist in einem Normalzustand,
die Feststellbremse des Schienenfahrzeugs ist nicht betätigt und
die Leistung der Betriebsbremse, die im Schienenfahrzeug betätigt ist, ist auf maximalem Pegel.

2. Frostschutzverfahren nach Anspruch 1, wobei das Steuern (S120) des Bremssattels zum Durchführen des Löse- und Klemmvorgangs basierend auf dem Intervall des ersten voreingestellten Zeitraums umfasst:
Steuern einer Vielzahl von Bremssätteln, um den Löse- und Klemmvorgang basierend auf dem Intervall des ersten voreingestellten Zeitraums der Reihe nach durchzuführen.

3. Frostschutzverfahren nach Anspruch 2, wobei das Steuern der Vielzahl von Bremssätteln zum Durchführen des Löse- und Klemmvorgangs der Reihe nach basierend auf dem Intervall des ersten Zeitraums umfasst:
Steuern der Vielzahl von Bremssätteln, um den Löse- und Klemmvorgang nach einer voreingestellten Nummerierungssequenz durchzuführen;
wobei das Steuern der Vielzahl von Bremssätteln, um den Löse- und Klemmvorgang gemäß der voreingestellten Nummerierungssequenz durchzuführen, wiederholt wird, nachdem der letzte Bremssattel nach der voreingestellten Nummerierungssequenz den Löse- und Klemmvorgang durchgeführt hat.

4. Frostschutzverfahren nach einem der Ansprüche 1 bis 3, ferner umfassend:
Erhalten (S200) einer Anweisung zum Aktivieren eines Frostschutzmodus.

5. Frostschutzverfahren nach einem der Ansprüche 1 bis 3, ferner umfassend:
Messen (S203) eines dritten Zeitraums, als Reaktion auf das Bestimmen, dass die Umgebungstemperatur niedriger ist als der voreingestellte Temperaturschwellenwert und der Zustand des Schienenfahrzeugs die voreingestellte Fahrzeugbedingung erfüllt; und
Steuern (S206) aller Bremssättel zum Klemmen, um einen Bremszustand wiederherzustellen, wenn der dritte Zeitraum einen voreingestellten Zeitschwellenwert zum Beenden erreicht.

6. Frostschutzvorrichtung für eine Bremsvorrichtung, umfassend:
eine Erhalteeinheit (10), konfiguriert zum Erhalten einer Umgebungstemperatur und eines Zustands eines Schienenfahrzeugs, und
eine Steuereinheit (20), konfiguriert zum Steuern eines Bremssattels, um einen Löse- und Klemmvorgang basierend auf einem Intervall eines ersten voreingestellten Zeitraums durchzuführen, in einem Fall, in dem die Umgebungstemperatur niedriger ist als ein voreingestellter Temperaturschwellenwert und der Zustand des Schienenfahrzeugs eine voreingestellte Fahrzeugbedingung erfüllt;
wobei der Löse- und Klemmvorgang Lösen des Bremssattels über einen zweiten voreingestellten Zeitraum und anschließendes Klemmen des Bremssattels umfasst,
wobei die Vorrichtung **dadurch gekennzeichnet ist, dass** die voreingestellte Fahrzeugbedingung umfasst:
eine Energiequelle des Schienenfahrzeugs ist in einem Normalzustand,
die Feststellbremse des Schienenfahrzeugs ist nicht betätigt und
die Leistung der Betriebsbremse, die im Schienenfahrzeug betätigt ist, ist auf maximalem Pegel.

7. Frostschutzvorrichtung nach Anspruch 6, wobei die Steuereinheit (20) ferner dazu konfiguriert ist, eine Vielzahl von Bremssätteln zu steuern, um den Löse- und Klemmvorgang basierend auf dem Intervall des ersten voreingestellten Zeitraums der Reihe nach durchzuführen.

8. Frostschutzvorrichtung nach Anspruch 7, wobei die Steuereinheit (20) ferner konfiguriert ist zum:
Steuern der Vielzahl von Bremssätteln, um den Löse- und Klemmvorgang nach einer voreingestellten Nummerierungssequenz durchzuführen; und
Wiederholen des Steuerns der Vielzahl von Bremssätteln, um den Löse- und Klemmvorgang gemäß der voreingestellten Nummerierungssequenz durchzuführen, nachdem der letzte Bremssattel nach der voreingestellten Nummerierungssequenz den Löse- und Klemmvorgang durchgeführt hat.

9. Frostschutzvorrichtung nach einem der Ansprüche 6 bis 8, ferner umfassend:
eine Zeitmesseinheit (30), dazu konfiguriert, einen dritten Zeitraum zu messen, als Reaktion darauf, dass bestimmt wird, dass die Umgebungstemperatur niedriger ist als der voreingestellte Temperaturschwellenwert und der Zustand des Schienenfahrzeugs die voreingestellte Fahrzeugbedingung erfüllt; und
eine zentrale Steuereinheit (40), dazu konfiguriert, das Klemmen aller Bremssättel zu steuern, um einen Bremszustand wiederherzustellen, wenn der dritte Zeitraum einen voreingestellten Zeitschwellenwert zum Beenden erreicht.

## Revendications

1. Procédé antigel destiné à un dispositif de freinage, le procédé comprenant :
l'obtention (S100) d'une température ambiante et d'un état d'un véhicule ferroviaire ; et
la commande (S120) d'une action de desserrage et de serrage à être effectuée par un étrier de frein sur la base d'un intervalle d'une première période prédéfinie, si la température ambiante est inférieure à un seuil de température prédéfini et l'état du véhicule ferroviaire satisfait à une condition de véhicule prédéfinie ;
l'action de desserrage et de serrage comprenant : le desserrage de l'étrier de frein pendant une deuxième période prédéfinie et ensuite le serrage de l'étrier de frein, et
le procédé étant **caractérisé en ce que**
la condition de véhicule prédéfinie comprend :
qu'une source d'alimentation du véhicule ferroviaire soit dans un état normal,
qu'un freinage de stationnement ne soit pas appliqué au véhicule ferroviaire, et
qu'un freinage de service appliqué au véhicule ferroviaire soit à un niveau maximal.

2. Le procédé antigel selon la revendication 1, dans lequel la commande (S120) de l'action de desserrage et de serrage à être effectuée par l'étrier de frein, sur la base de l'intervalle de la première période prédéfinie, comprend :
la commande de l'action de desserrage et de serrage à être effectuée en séquence par une pluralité d'étriers de frein, sur la base de l'intervalle de la première période prédéfinie.

3. Le procédé antigel selon la revendication 2, dans lequel la commande de l'action de desserrage et de serrage à être effectuée en séquence par la pluralité d'étriers de frein, sur la base de l'intervalle de la première période prédéfinie, comprend :
la commande de l'action de desserrage et de serrage à être effectuée par la pluralité d'étriers de frein selon une séquence de numérotage prédéfinie ;
dans lequel la commande de l'action de desserrage et de serrage à être effectuée par la pluralité d'étriers de frein, selon la séquence de numérotage prédéfinie, est répétée après que le dernier étrier de frein, selon la séquence de numérotage prédéfinie, effectue l'action de desserrage et de serrage.

4. Le procédé antigel selon l'une quelconque des revendications 1 à 3, comprenant en outre :
l'obtention (S200) d'une instruction permettant d'activer un mode antigel.

5. Le procédé antigel selon l'une quelconque des revendications 1 à 3, comprenant en outre :
le réglage (S203) d'une troisième période, en réponse à la détermination que la température ambiante est inférieure au seuil de température prédéfini et que l'état du véhicule ferroviaire satisfait à la condition de véhicule prédéfinie ; et
la commande (S206) du serrage de tous les étriers de frein afin de restaurer un état de freinage, en réponse au fait que la troisième période atteint un seuil de temps prédéfini pour se terminer.

6. Appareil antigel destiné à un dispositif de freinage, l'appareil comprenant :
une unité d'obtention (10), conçue pour obtenir une température ambiante et un état d'un véhicule ferroviaire ; et
une unité de commande (20), conçue pour amener un étrier de frein à effectuer une action de desserrage et de serrage sur la base d'un intervalle d'une première période prédéfinie, si la température ambiante est inférieure à un seuil de température prédéfini et l'état du véhicule ferroviaire satisfait à une condition de véhicule prédéfinie ;
l'action de desserrage et de serrage comprenant le desserrage de l'étrier de frein pendant une deuxième période prédéfinie et ensuite le serrage de l'étrier de frein,
l'appareil étant **caractérisé en ce que**
la condition de véhicule prédéfinie comprend :
qu'une source d'alimentation du véhicule ferroviaire soit dans un état normal,
qu'un freinage de stationnement ne soit pas appliqué au véhicule ferroviaire, et
qu'un freinage de service appliqué au véhicule ferroviaire soit à un niveau maximal.

7. L'appareil antigel selon la revendication 6, dans lequel l'unité de commande (20) est conçue en outre pour amener une pluralité d'étriers de frein à effectuer l'action de desserrage et de serrage en séquence, sur la base de l'intervalle de la première période prédéfinie.

8. L'appareil antigel selon la revendication 7, dans lequel l'unité de commande (20) est conçue en outre :
pour amener la pluralité d'étriers de frein à effectuer l'action de desserrage et de serrage selon une séquence de numérotage prédéfinie ; et
pour répéter la commande de l'action de desserrage et de serrage à être effectuée par la pluralité d'étriers de frein selon la séquence de numérotage prédéfinie, après que le dernier étrier de frein, selon la séquence de numérotage prédéfinie, effectue l'action de desserrage et de serrage.

9. L'appareil antigel selon l'une quelconque des revendications 6 à 8, comprenant en outre :
une unité de réglage (30), conçue pour régler une troisième période, en réponse à la détermination que la température ambiante est inférieure au seuil de température prédéfini et que l'état du véhicule ferroviaire satisfait à la condition de véhicule prédéfinie ; et
une unité de commande centralisée (40), conçue pour amener tous les étriers de frein à être serrés afin de restaurer un état de freinage, en réponse au fait que la troisième période atteint un seuil de temps prédéfini pour se terminer.
